(19) Europäisches Patentamt / European Patent Office / Office européen des brevets

(11) **EP 4 195 649 B1**

(12) **EUROPEAN PATENT SPECIFICATION**

(45) Date of publication and mention
of the grant of the patent:
**25.03.2026 Bulletin 2026/13**

(21) Application number: **21867131.1**

(22) Date of filing: **09.09.2021**

(51) International Patent Classification (IPC):
**G03B 17/12** (2021.01)    **G03B 9/02** (2021.01)
**G02B 13/00** (2006.01)    **G02B 3/14** (2006.01)
**G02B 3/04** (2006.01)    **G02B 1/04** (2006.01)
**G02B 7/08** (2021.01)    **G02B 9/62** (2006.01)
**G02B 9/64** (2006.01)

(52) Cooperative Patent Classification (CPC):
**G02B 3/14; G02B 7/021; G02B 7/08; G02B 9/62;**
**G02B 9/64; G02B 13/0045; G02B 13/0075;**
**H04N 23/55**

(86) International application number:
**PCT/KR2021/012251**

(87) International publication number:
**WO 2022/055266 (17.03.2022 Gazette 2022/11)**

(54) **ELECTRONIC DEVICE INCLUDING CAMERA MODULE THAT TAKES PHOTOGRAPHS THROUGH AT LEAST PART OF DISPLAY**

ELEKTRONISCHE VORRICHTUNG MIT KAMERAMODUL ZUR AUFNAHME VON FOTOGRAFIEN DURCH MINDESTENS EINEN TEIL EINER ANZEIGE

DISPOSITIF ÉLECTRONIQUE COMPRENANT UN MODULE DE CAMÉRA QUI PREND DES PHOTOGRAPHIES PAR L'INTERMÉDIAIRE D'AU MOINS UNE PARTIE D'AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.09.2020 KR 20200116008**

(43) Date of publication of application:
**14.06.2023 Bulletin 2023/24**

(73) Proprietor: **Samsung Electronics Co., Ltd.**
**Suwon-si, Gyeonggi-do 16677 (KR)**

(72) Inventors:
• **JEON, Sangyong**
**Suwon-si, Gyeonggi-do 16677 (KR)**
• **KIM, Seungyong**
**Suwon-si, Gyeonggi-do 16677 (KR)**
• **LEE, Jeongyeol**
**Suwon-si, Gyeonggi-do 16677 (KR)**

(74) Representative: **Arnold & Siedsma**
**Bezuidenhoutseweg 57**
**2594 AC The Hague (NL)**

(56) References cited:
**EP-A1- 3 508 911        CN-A- 110 149 470**
**CN-A- 110 784 635        JP-A- 2009 080 282**
**KR-A- 20080 104 822        KR-A- 20090 027 330**
**KR-A- 20170 126 171        KR-A- 20180 102 883**
**US-A1- 2013 313 672        US-A1- 2020 186 688**
**US-A1- 2022 279 100**

## Description

[Technical Field]

Embodiments of the disclosure described herein relate to an electronic device including a camera module for taking an image through at least a portion of a display.

[Background Art]

A portable electronic device, such as a smartphone or a tablet computer, provides a wide screen by increasing the size of a display region while minimizing a bezel region. An image sensor for implementing a camera (e.g., a camera module), an illuminance sensor for sensing illuminance, and a fingerprint recognition sensor for fingerprint verification, together with a display device (e.g., a display), may be disposed on a front surface of the portable electronic device.

KR 2017 0126171 A discloses a lens assembly comprising a base having an inner through-hole, a second lens unit disposed in the through-hole, a second lens unit spaced from the first lens unit to be disposed in the through-hole, and a liquid lens unit disposed between the first lens unit and the second lens unit. The base is able to comprise an insertion tool where the liquid lens unit is inserted.

EP 3 508 911 A1 discloses a camera module comprising a holder; a first lens part disposed at an upper part of the holder, a second lens part disposed at an lower part of the holder, a liquid lens coupled to the holder and disposed between the first lens part and the second lens part, a substrate electrically connected to the liquid lens, and an image sensor disposed in the optical axis direction of the liquid lens and mounted on the substrate. A distance from a rear surface of the first lens part to a front surface of the second lens part on an optical axis is 1.8-2.1 times the thickness of the liquid lens.

[Disclosure]

[Technical Problem]

In the electronic device, to use the display region to the maximum, the image sensor (e.g., a camera module) may be disposed to at least partially vertically overlap the display. To arrange the image sensor such that the image sensor vertically overlaps the display, the display may include a camera hole corresponding to the position of the image sensor. To minimize the size of the camera hole, an aperture stop may be disposed in the display. However, when a lens assembly vertically moves toward the display for auto focus (AF) in the state in which the aperture stop is disposed in the display, optical characteristics of the lens assembly may be changed.

Embodiments of the disclosure provide an electronic device including a camera module for performing AF through a variable lens without movement of a lens assembly, with an aperture stop disposed in a display.

[Technical Solution]

The invention is defined by the appended claims.

An electronic device according to an embodiment of the disclosure includes a camera module including at least one lens, a display including a camera exposure region that at least partially overlaps the at least one lens when viewed in a direction corresponding to an optical axis of the at least one lens, and an aperture stop disposed in the camera exposure region. The camera module includes a variable lens having a curvature changed based on supplied electrical energy, a first lens that is disposed between the display and the variable lens and that has a positive focal length, and a second lens that is disposed farther away from the display than the first lens and that has a negative focal length. A ratio between a first distance from the aperture stop to the variable lens and a second distance from the first lens to the variable lens is set to have a magnitude within a specified range.

An electronic device according to an embodiment of the disclosure includes a first lens assembly including a first lens having a positive focal length, a second lens assembly including a second lens having a negative focal length, a variable lens that is disposed between the first lens assembly and the second lens assembly and that has a curvature changed based on supplied electrical energy, a display including a camera exposure region that at least partially overlaps the first lens when viewed in a direction corresponding to an optical axis of the first lens, and an aperture stop disposed in the camera exposure region. A ratio between a first distance from the aperture stop to the variable lens and a second distance from the first lens to the variable lens is set to have a magnitude within a specified range.

[Advantageous Effects]

According to the embodiments of the disclosure, the aperture stop is located in the display, and thus the size of the camera hole may be minimized.

According to the embodiments of the disclosure, by performing auto focus (AF) through the variable lens without movement of the lens assembly, optical characteristics of the camera module may remain constant, with the aperture stop disposed in the display.

In addition, the disclosure may provide various effects that are directly or indirectly recognized.

[Description of Drawings]

FIG. 1 is a view illustrating an electronic device according to an embodiment.
FIG. 2 is an exploded perspective view illustrating a camera module disposed to vertically overlap a camera exposure region of FIG. 1.
FIG. 3 is a sectional view of the camera module taken along line A-A' of FIG. 2.
FIG. 4 is a view illustrating implemented embodiments of an aperture stop disposed in a display of FIG. 2.
FIG. 5 is a view illustrating one example of the configuration of the camera module according to an embodiment.
FIG. 6 is a view illustrating the spherical aberration, astigmatism, and distortion factor of a lens combination of FIG. 5.
FIG. 7 is a view illustrating another example of the configuration of the camera module according to an embodiment.
FIG. 8 is a view illustrating the spherical aberration, astigmatism, and distortion factor of a lens combination of FIG. 7.
FIG. 9 is a view illustrating another example of the configuration of the camera module according to an embodiment.
FIG. 10 is a view illustrating the spherical aberration, astigmatism, and distortion factor of a lens combination of FIG. 9.
FIG. 11 is a view illustrating another example of the configuration of the camera module according to an embodiment.
FIG. 12 is a view illustrating the spherical aberration, astigmatism, and distortion factor of a lens combination of FIG. 11.
FIG. 13 is a block diagram illustrating an electronic device in a network environment according to various embodiments.

With regard to description of the drawings, identical or similar reference numerals may be used to refer to identical or similar components.

[Mode for Invention]

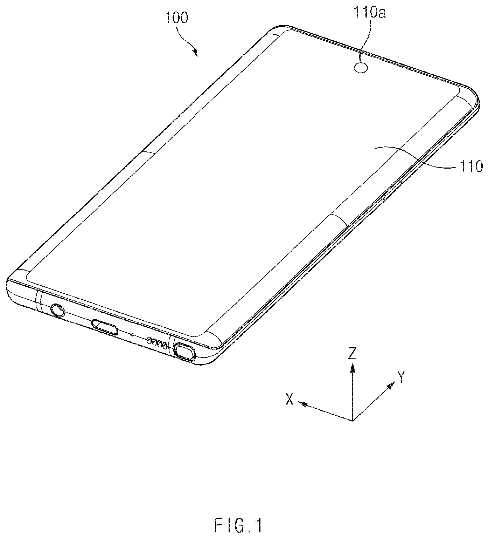

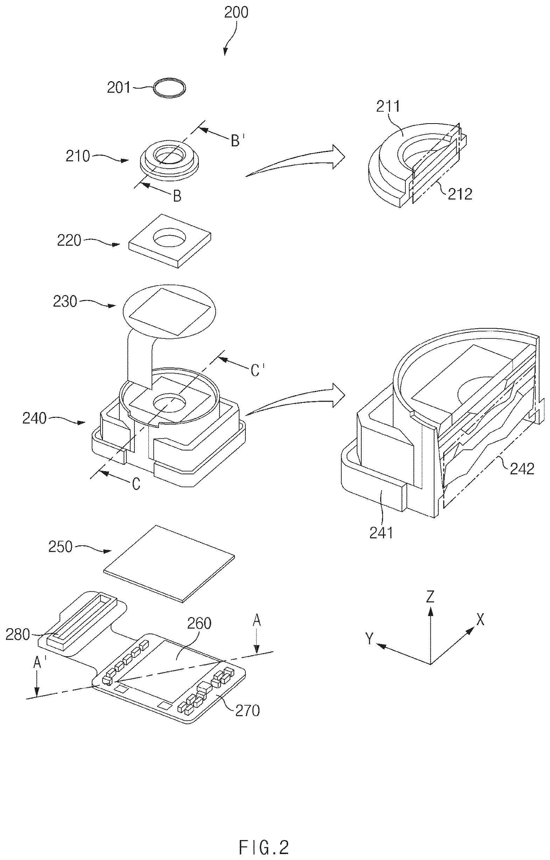

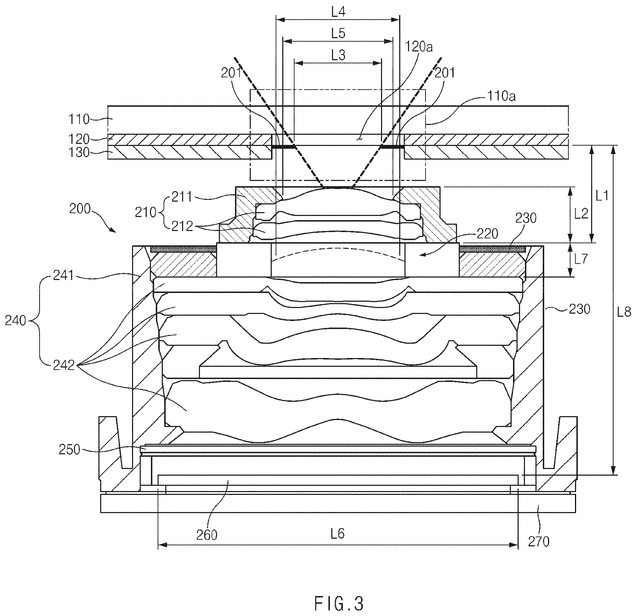

FIG. 1 is a view illustrating an electronic device according to an embodiment. FIG. 2 is an exploded perspective view illustrating a camera module disposed to vertically overlap a camera exposure region 110a of FIG. 1. Furthermore, FIG. 2 includes an enlarged view of a section of a first lens assembly 210 taken along line B-B'. FIG. 2 includes an enlarged view of a section of a second lens assembly 240 taken along line C-C'. FIG. 3 is a sectional view of the camera module taken along line A-A' of FIG. 2. In FIG. 3, line A-A' may correspond to a diagonal line of an image sensor 260.

Referring to FIGS. 1 to 3, the electronic device 100 according to an embodiment may include a housing that includes a first surface (or, a front surface), a second surface (or, a rear surface), and a side surface surrounding a space between the first surface and the second surface. According to an embodiment, the first surface may be formed by a first plate (or, a front plate) 110 (e.g., a glass plate including various coating layers, or a polymer plate), at least a portion of which is substantially transparent. The second surface may be formed by a second plate (or, a back plate) that is substantially opaque. The second plate may be formed of, for example, coated or colored glass, ceramic, a polymer, metal (e.g., aluminum, stainless steel (STS), or magnesium), or a combination of at least two of the aforementioned materials. The side surface may be formed by a side bezel structure (or, a side member) that is coupled with the first plate 110 and the second plate and that includes metal and/or a polymer. In some embodiments, the back plate and the side bezel structure may be integrally formed with each other and may include the same material (e.g., a metallic material such as aluminum).

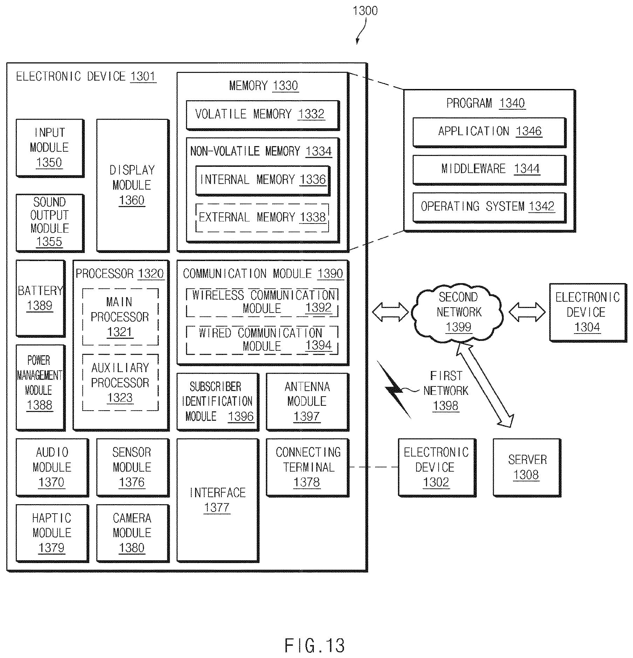

According to an embodiment, the electronic device 100 may include a printed circuit board therein. For example, a processor (e.g., a processor 1320 of FIG. 13 to be described below), a memory, and/or an interface may be mounted on the printed circuit board. The processor may include, for example, one or more of a central processing unit, an application processor, a graphic processing unit, an image signal processor, a sensor hub processor, or a communication processor. The memory may include, for example, a volatile memory or a non-volatile memory. The interface may include, for example, a high-definition multimedia interface (HDMI), a universal serial bus (USB) interface, an SD card interface, and/or an audio interface. The interface, for example, may electrically or physically connect the electronic device 100 with an external electronic device and may include a USB connector, an SD card/MMC connector, or an audio connector.

According to an embodiment, the electronic device 100 may include a display panel 120. For example, the display panel 120 may be coupled to one surface of a support member 130 and may be disposed between the first plate 110 and the support member 130. The first plate 110 may include the camera exposure region 110a formed in a position corresponding to the camera module 200 when the first plate 110 is viewed in the Z-axis direction. The camera exposure region 110a may be formed through the first plate 110, the display panel 120, and the support member 130. For example, the camera exposure region 110a may form an optical hole. A portion of the display panel 120 or the support member 130 that corresponds to the camera exposure region 110a may be filled with a transparent material 120a, or may have a through-hole formed therein. An aperture stop 201 is disposed in the camera exposure region 110a. For example, the aperture stop 201 may be disposed on one surface of the transparent material 120a or one surface of the first plate 110. The aperture stop 201 may be disposed to correspond to an optical axis of lenses (e.g., a first lens group 212 and a second lens group 242).

According to an embodiment, the camera module 200 may include the first lens assembly 210, a variable lens 220 (e.g., an active lens or a tunable lens), a first circuit board 230, the second lens assembly 240, a filter 250, the image sensor 260, a second circuit board 270, or a connector 280.

According to an embodiment, the first lens assembly 210 may include a first lens housing 211 and the first lens group 212 including at least one lens. The second lens assembly 240 may include a second lens housing 241 and the second lens group 242 including at least one lens. For example, the aperture stop 201, the first lens group 212, the variable lens 220, and the second lens group 242 may be disposed with respect to the same optical axis (e.g., the Z-axis) (or, to have the same optical axis).

According to an embodiment, the first lens group 212, the variable lens 220, and the second lens group 242 may collect light incident from the outside and may transmit the collected light to the image sensor 260 disposed under the second lens housing 241. For example, the first lens group 212 may be constituted by one or more lenses. For example, the first lens group 212 may include at least one lens that is convex toward the aperture stop 201 (or the camera exposure region 110a) and has a positive focal length. The second lens group 242 may be constituted by one or more lenses. For example, the second lens group 242 may include at least one lens that is concave toward the aperture stop 201 (or the camera exposure region 110a) and has a negative focal length. **In** another example, the second lens group 242 may include four or more lenses having a negative focal length. The first lens group 212, the variable lens 220, and the second lens group 242 may be disposed in positions corresponding to the camera exposure region 110a. The first lens assembly 210 may be coupled (or, fixed) to the second lens assembly 240.

According to an embodiment, the variable lens 220 may be disposed between the first lens assembly 210 and the second lens assembly 240. For example, the variable lens 220 may have a curvature changed based on supplied electrical energy and may serve as a lens. For example, the variable lens 220 may include a liquid lens.

According to an embodiment, the variable lens 220 may be connected, through the first circuit board 230, to the processor operationally connected with the camera module 200. For example, the variable lens 220 may be connected to the first circuit board 230. The first circuit board 230 may be connected to the second circuit board 270 through one surface of the second lens assembly 240. The second circuit board 270 may be connected to the connector 280 through a flexible printed circuit board (FPCB). The connector 280 may be operationally connected with the processor. The processor may change the curvature of the variable lens 220 through an electrical signal (e.g., voltage or current). The processor may perform an auto focus (AF) operation by controlling the variable lens. For example, the first circuit board 230 may include an FPCB.

According to an embodiment, the filter 250 may be disposed between the second lens assembly 240 and the image sensor 260. For example, the filter 250 may include an infrared filter that filters an infrared region from light incident through the lenses. For example, the filter 250 may be disposed between the second lens assembly 240 and the image sensor 260. In another example, the filter 250 may be disposed between the variable lens 220 and the second lens assembly 240. According to various embodiments, the filter 250 may be omitted from the camera module 200.

According to an embodiment, image data obtained by the image sensor 260 may be transmitted to the processor. For example, the image sensor 260 may be mounted on the second circuit board 270. The second circuit board 270 may be connected to the connector 280 through the FPCB. The connector 280 may be operationally connected with the processor.

According to an embodiment, the lenses included in the camera module 200 may satisfy Equation 1. For example, the aperture stop 201 may be spaced apart from a first lens surface included in the first lens assembly 210 (a lens surface closest to the display panel 120) by a specified distance. For example, the distance between the aperture stop 201 and the variable lens 220 (or a first surface of the variable lens 220 (a surface closest to the display panel 120)) in the Z-axis direction may have a first length L1. The distance between the first lens surface of the first lens assembly 210 and the variable lens 220 (or the first surface of the variable lens 220) in the Z-axis direction may have a second length L2. The first length L1 and the second length L2 may have a relationship as in Equation 1.

[Equation 1]

$$1.1 \leq \frac{L1}{L2} \leq 2.0$$

According to an embodiment, the lenses included in the camera module 200 may satisfy Equation 2. For example, the size (e.g., diameter) of the aperture stop 201 may be smaller than the effective diameter of the variable lens 220. The effective diameter may be defined as the distance between two points at which the border where the curvature of the lens starts and a straight line passing through the center of the lens meet. For example, the size of the aperture stop 201 may have a third length L3. The effective diameter of the variable lens 220 may have a fourth length L4. The third length L3 and the fourth length L4 may have a relationship as in Equation 2.

[Equation 2]

$$0.2 \leq \frac{L3}{L4} \leq 1.0$$

According to an embodiment, the lenses included in the camera module 200 may satisfy Equation 3. For example, the ratio of the effective diameter of a first lens (e.g., a lens closest to the display module 120) among the lenses included in the first lens assembly 210 to the diagonal length of the image sensor 260 may have a specified ratio. For example, the effective diameter of the first lens may have a fifth length L5. The diagonal length of the image sensor 260 may have a sixth length L6. The fifth length L5 and the sixth length L6 may have a relationship as in Equation 3.

[Equation 3]

$$0.2 \leq \frac{L5}{L6} \leq 0.8$$

According to an embodiment, the lenses included in the camera module 200 may satisfy Equation 4. For example, as in Equation 4, the ratio of the distance (e.g., the first length L1) between the aperture stop 201 and the variable lens 220 in the Z-axis direction to the diagonal length (e.g., the sixth length L6) of the image sensor 260 may have a specified ratio.

[Equation 4]

$$0.3 \leq \frac{L1}{L6} \leq 2.0$$

According to an embodiment, the lenses included in the camera module 200 may satisfy Equation 5. For example, the ratio of the thickness of the center of the variable lens 220 to the distance from the aperture stop 201 to an image surface of the image sensor 260 may have a specified ratio. For example, the thickness of the center of the variable lens 220 may have a seventh length L7. The distance from the aperture stop 201 to the image surface of the image sensor 260 may have an eighth length L8. The seventh length L7 and the eighth length L8 may have a relationship as in Equation 5.

[Equation 5]

$$0.02 \leq \frac{L7}{L8} \leq 0.3$$

According to an embodiment, the lenses included in the camera module 200 may satisfy Equation 6. In Equation 6, f may represent the composite focal length of the lenses included in the camera module 200, and fmax may represent the focal length of a lens having the highest focal length among the lenses included in the camera module 200.

[Equation 6]

$$0.3 < \frac{f}{fmax} < 3.0$$

According to an embodiment, the camera module 200 may include at least one aspheric lens including at least one point of inflection. According to various embodiments, the camera module 200 may include three or more injection-molded plastic aspheric lenses.

According to various embodiments (not illustrated), the electronic device 100 may include a rollable display. The camera module 200 may be disposed to vertically overlap a portion of the rollable display. In the rollable display, a partial region of a glass window (e.g., the first plate 110) constituting the display may be deformed due to repeated operations such as extension or retraction. The camera module 200 may control the curvature of the variable lens 220 in response to the deformation of the glass window and may obtain a constant-quality image irrespective of the deformation of the glass window.

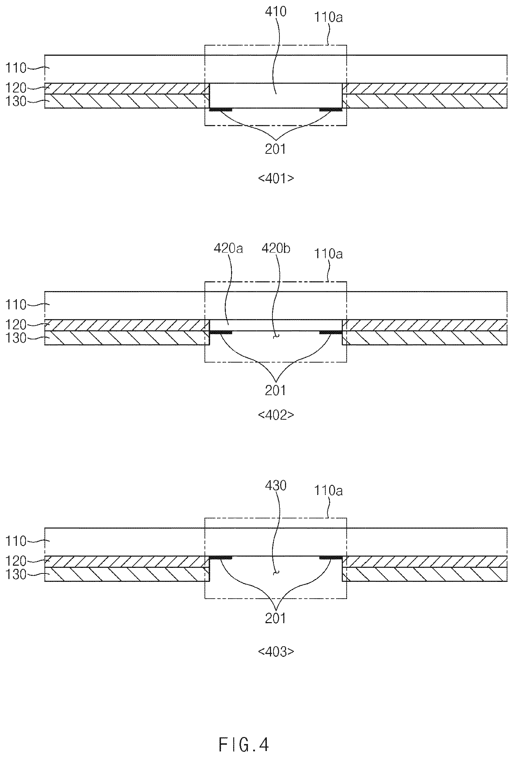

FIG. 4 is a view illustrating implemented embodiments of the aperture stop disposed in the display of FIG. 2.

Referring to a first embodiment 401 of FIG. 4, a through-hole may be formed through the display panel 120 and the support member 130 that correspond to the camera exposure region 110a. The through-hole may be filled with a transparent member 410. The aperture stop 201 may be disposed in a band shape on one surface of the transparent member 410.

Referring to a second embodiment 402 of FIG. 4, a through-hole may be formed through the display panel 120 and the support member 130 that correspond to the camera exposure region 110a. A portion of the through-hole that corresponds to the display panel 120 may be filled with a transparent member 420a. A portion of the through-hole that corresponds to the support member 130 may be an empty space 420b. The aperture stop 201 may be disposed in a band shape on one surface of the transparent member 410.

Referring to a third embodiment 403 of FIG. 4, a through-hole may be formed through the display panel 120 and the support member 130 that correspond to the camera exposure region 110a. The through-hole may be an empty space 430. The aperture stop 201 may be disposed in a band shape on one surface of the first plate 110.

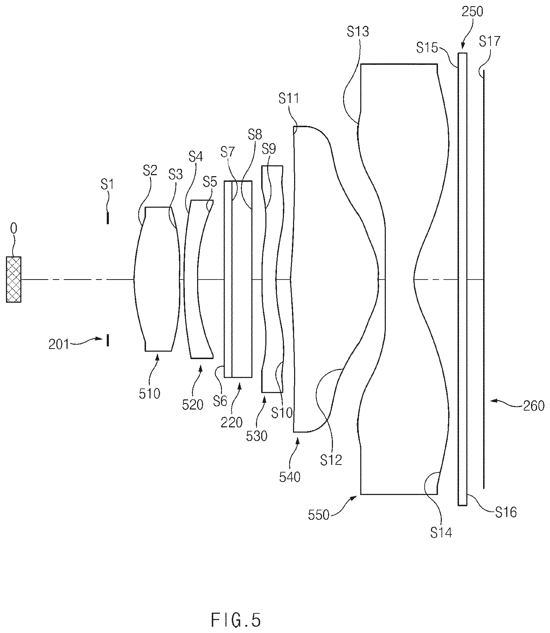

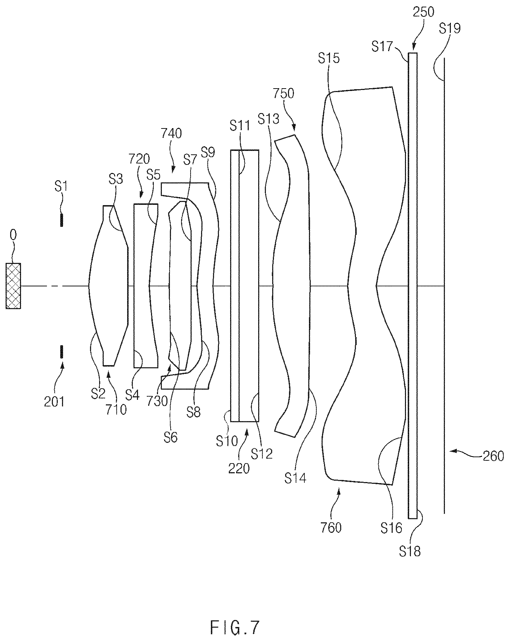

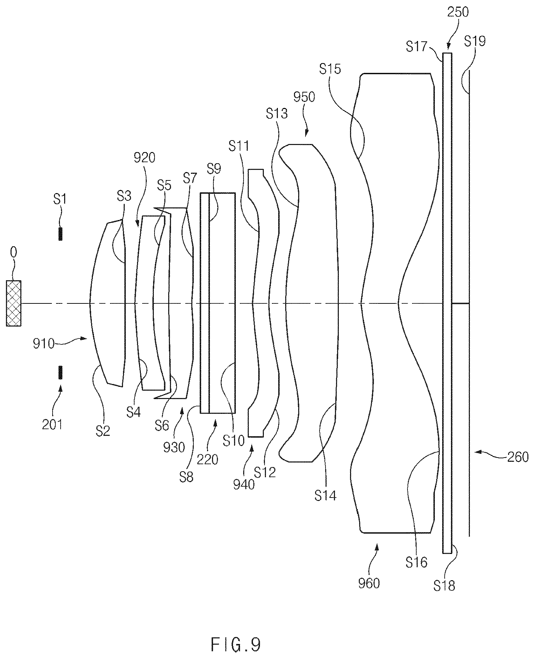

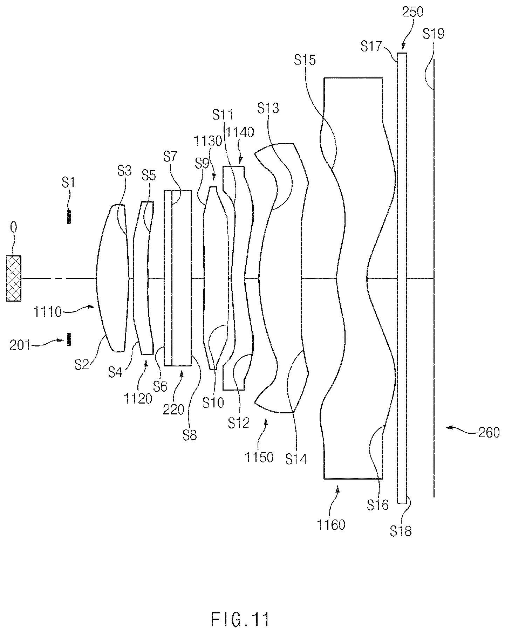

FIG. 5 to 12 may illustrate various embodiments of a lens combination included in the camera module 200 of FIG. 2. FIG. 5 may illustrate a first lens combination. FIG. 7 may illustrate a second lens combination. FIG. 9 may illustrate a third lens combination. FIG. 11 may illustrate a fourth lens combination. The first to fourth lens combinations may satisfy at least one of Equations 1 to 6. For example, lens data for the first to fourth lens combinations (or lens data used in Equations 1 to 6) may be set as shown in Table 1. Values calculated by applying the lens data of Table 1 to Equations 1 to 6 may be listed in Table 2. Referring to Table 2, the first to fourth lens combinations may satisfy Equations 1 to 6.

[Table 1]

|  | First Lens Combination | Second Lens Combination | Third Lens Combination | Fourth Lens Combination |
|---|---|---|---|---|
| L1 | 1.524 | 2.100 | 1.658 | 1.243 |
| L2 | 1.174 | 1.750 | 1.308 | 0.893 |
| L3 | 1.440 | 1.460 | 1.460 | 1.460 |
| L4 | 2.314 | 3.041 | 2.352 | 2.097 |
| L5 | 1.646 | 1.762 | 1.808 | 1.762 |
| L6 | 5.564 | 5.564 | 5.564 | 5.564 |
| L7 | 0.350 | 0.350 | 0.401 | 0.350 |
| L8 | 4.906 | 4.750 | 4.830 | 4.775 |
| f | 3.240 | 3.344 | 3.287 | 3.354 |
| fmax | 1.455 | 3.486 | 4.172 | 3.551 |

[Table 2]

|  | First Lens Combination | Second Lens Combination | Third Lens Combination | Fourth Lens Combination |
|---|---|---|---|---|
| Equation 1 | 1.30 | 1.20 | 1.27 | 1.39 |
| Equation 2 | 0.62 | 0.48 | 0.62 | 0.70 |
| Equation 3 | 0.30 | 0.32 | 0.32 | 0.32 |
| Equation 4 | 0.55 | 0.75 | 0.60 | 0.45 |
| Equation 5 | 0.07 | 0.07 | 0.08 | 0.07 |
| Equation 6 | 2.23 | 0.96 | 0.79 | 0.94 |

According to an embodiment, the camera module 200 may include at least one aspheric lens. The aspheric equation (e.g., sag value) of the aspheric lens may be expressed as Equation 7. In Equation 7, x may represent the distance from the apex of the lens in the direction of the optical axis, y may represent the distance in a direction perpendicular to the optical axis, c' may represent the reciprocal of the radius of curvature at the apex of the lens, and K may represent a conic constant. In addition, A, B, C, D, E, F, G, H, and J may represent aspheric coefficients.

[Equation 7]

$$x = \frac{c'y^2}{1 + \sqrt{1 - (K+1)c'^2y^2}} + Ay^4 + By^6 + Cy^8 + Dy^{10} + Ey^{12} + Fy^{14} + Gy^{16} + Hy^{18} + Jy^{20}$$

FIG. 5 is a view illustrating one example of the configuration of the camera module according to an embodiment.

Referring to FIG. 5, the camera module 200 may include a first lens assembly (e.g., the first lens assembly 210), a variable lens 220, a second lens assembly (e.g., the second lens assembly 240), a filter 250, and an image sensor 260. The first lens assembly may include a first lens 510 and a second lens 520. The second lens assembly may include a third lens 530, a fourth lens 540, and a fifth lens 550. An aperture stop 201 is disposed in a camera exposure region of a display device (the camera exposure region 110a). The aperture stop 201, the variable lens 220, and the first to fifth lenses 510, 520, 530, 540, and 550 may be disposed with respect to the same optical axis.

According to an embodiment, the first lens 510 and the fourth lens 540 may have a positive focal length. The second lens 520, the third lens 530, and the fifth lens 550 may have a negative focal length.

According to an embodiment, lens data for the lens combination of FIG. 5 may be listed in Table 3. In Table 3, O may indicate an object, S1 may indicate an aperture stop surface of the aperture stop 201, S2 to S14 may indicate surfaces of the lenses illustrated in FIG. 5, S15 and S15 may indicate surfaces of the filter 250 illustrated in FIG. 5, and S17 may indicate an image surface of the image sensor 260. For example, the lens combination of FIG. 5 may have a focal length of 3.24 mm, an F-number of 2.26, an angle of view of 80 degrees, and a diagonal length of the image sensor 260 of 5.564 mm.

[Table 3]

| Surface | Radius of Curvature | Thickness or Air Gap | Effective Radius | Focal Length | Focal length |
|---|---|---|---|---|---|
| O (Object) | infinity | 900.000 | | | |
| S1(stp) | infinity | 0.350 | 0.720 | | |
| S2 | 2.140 | 0.593 | 0.823 | 3.181 | 1.544 |
| S3 | -8.353 | 0.052 | 0.850 | | |
| S4 | 4.648 | 0.190 | 0.911 | -7.575 | 1.671 |
| S5 | 2.401 | 0.339 | 0.937 | | |
| S6 | infinity | 0.100 | 1.027 | tunable | tunable |
| S7 | infinity | 0.250 | 1.060 | tunable | tunable |
| S8 | infinity | 0.130 | 1.157 | | |
| S9 | 2.688 | 0.190 | 1.226 | -18.429 | 1.661 |
| S10 | 2.144 | 0.191 | 1.345 | | |
| S11 | 7.449 | 1.145 | 1.570 | 1.602 | 1.544 |
| S12 | -0.938 | 0.076 | 1.885 | | |
| S13 | 2.990 | 0.380 | 2.231 | -1.455 | 1.544 |
| S14 | 0.600 | 0.588 | 2.553 | | |
| S15 | infinity | 0.110 | 2.659 | infinity | 1.517 |
| S16 | infinity | 0.226 | 2.688 | | |
| S17 | infinity | -0.005 | 2.782 | | |

Based on Equation 7, aspheric coefficients of the first to fifth lenses 510, 520, 530, 540, and 550 of FIG. 5 may be listed in Tables 4 to 6.

[Table 4]

| Surface | S2 | S3 | S4 |
|---|---|---|---|
| K(Conic) | -6.9997E+00 | 0.0000E+00 | -8.3593E+01 |
| A(4th) | 8.2478E-02 | -4.2518E-02 | 1.7902E-02 |
| B(6th) | -2.9547E-01 | -2.2666E-01 | -2.7006E-01 |
| C(8th) | 1.3989E+00 | 1.0626E+00 | 1.1349E+00 |
| D(10th) | -4.8847E+00 | -2.5847E+00 | -2.2792E+00 |
| E(12th) | 9.9156E+00 | 3.3674E+00 | 2.5777E+00 |
| F(14th) | -1.1538E+01 | -2.3200E+00 | -1.5282E+00 |
| G(16th) | 6.9615E+00 | 6.6276E-01 | 3.6960E-01 |
| H(18th) | -1.6466E+00 | 0.0000E+00 | 0.0000E+00 |
| J(20th) | 0.0000E+00 | 0.0000E+00 | 0.0000E+00 |

[Table 5]

| Surface | S5 | S9 | S10 |
|---|---|---|---|
| K(Conic) | -1.9191E+00 | 0.0000E+00 | 0.0000E+00 |
| A(4th) | -5.5029E-02 | -9.4244E-02 | -8.8234E-02 |
| B(6th) | -3.5082E-02 | -1.5867E-01 | -1.9331E-01 |
| C(8th) | 4.6090E-01 | 2.1822E-01 | 2.3557E-01 |
| D(10th) | -1.0594E+00 | -1.0445E-01 | -1.0636E-01 |
| E(12th) | 1.3007E+00 | -5.8431E-02 | -1.9702E-02 |
| F(14th) | -8.3979E-01 | 8.1237E-02 | 3.4756E-02 |
| G(16th) | 2.2402E-01 | -2.2681E-02 | -8.1705E-03 |
| H(18th) | 0.0000E+00 | 0.0000E+00 | 0.0000E+00 |
| J(20th) | 0.0000E+00 | 0.0000E+00 | 0.0000E+00 |

[Table 6]

| Surface | S11 | S12 | S13 | S14 |
|---|---|---|---|---|
| K(Conic) | 0.0000E+00 | -7.1579E+00 | 0.0000E+00 | -4.0878E+00 |
| A(4th) | 2.1245E-02 | -1.9322E-01 | -4.1566E-01 | -1.3530E-01 |
| B(6th) | -4.3901E-02 | 2.5264E-01 | 2.6035E-01 | 9.1605E-02 |
| C(8th) | -1.7877E-01 | -2.5438E-01 | -8.2727E-02 | -4.5431E-02 |
| D(10th) | 4.8008E-01 | 1.7183E-01 | -8.4723E-03 | 1.6744E-02 |
| E(12th) | -5.4109E-01 | -6.6958E-02 | 2.0554E-02 | -4.5265E-03 |
| F(14th) | 3.4779E-01 | 1.5569E-02 | -8.5377E-03 | 8.4322E-04 |
| G(16th) | -1.3231E-01 | -2.5045E-03 | 1.7204E-03 | -1.0033E-04 |
| H(18th) | 2.7683E-02 | 3.1971E-04 | -1.7498E-04 | 6.8209E-06 |
| J(20th) | -2.4512E-03 | -2.3530E-05 | 7.1994E-06 | -2.0128E-07 |

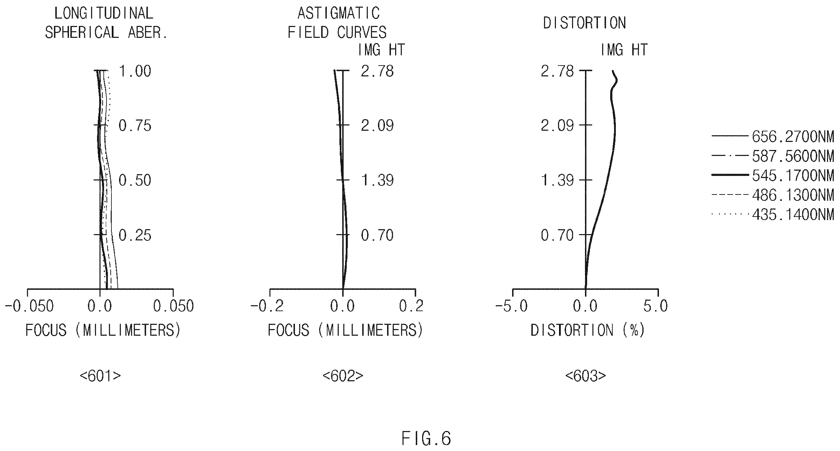

FIG. 6 is a view illustrating the spherical aberration, astigmatism, and distortion factor of the lens combination of FIG. 5.

Referring to FIG. 6, a first graph 601 may be a graph depicting the spherical aberration for the lens combination of FIG. 5 and may represent a change in longitudinal spherical aberration depending on a wavelength of light. The horizontal axis of the first graph 601 may represent the coefficient of the longitudinal spherical aberration, and the vertical axis of the first graph 601 may represent the normalized distance from the center of the optical axis. A second graph 602 may represent the astigmatism for the lens combination of FIG. 5. A third graph 603 may represent the distortion factor for the lens combination of FIG. 5. Referring to the graphs 601, 602, and 603 of FIG. 6, the lens combination of FIG. 5 may satisfy specified performance irrespective of the use of the variable lens 220.

FIG. 7 is a view illustrating another example of the configuration of the camera module according to an embodiment.

Referring to FIG. 7, the camera module 200 may include a first lens assembly (e.g., the first lens assembly 210), a variable lens 220, a second lens assembly (e.g., the second lens assembly 240), a filter 250, and an image sensor 260. The first lens assembly may include a first lens 710, a second lens 720, a third lens 730, and a fourth lens 740. The second lens assembly may include a fifth lens 750 and a sixth lens 760. An aperture stop 201 is disposed in a camera exposure region of a display device (the camera exposure region 110a). The aperture stop 201, the variable lens 220, and the first to sixth lenses 710, 720, 730, 740, 750, and 760 may be disposed with respect to the same optical axis.

According to an embodiment, the first lens 710, the third lens 730, and the fifth lens 750 may have a positive focal length. The second lens 720, the fourth lens 740, and the sixth lens 760 may have a negative focal length.

According to an embodiment, lens data for the lens combination of FIG. 7 may be listed in Table 7. In Table 7, O may indicate an object, S1 may indicate an aperture stop surface of the aperture stop 201, S2 to S16 may indicate surfaces of the lenses illustrated in FIG. 7, S17 and S18 may indicate surfaces of the filter 250 illustrated in FIG. 7, and S19 may indicate an image surface of the image sensor 260. For example, the lens combination of FIG. 7 may have a focal length of 3.34mm, an F-number of 2.3, an angle of view of 79.8 degrees, and a diagonal length of the image sensor 260 of 5.564 mm.

[Table 7]

| Surface | Radius of Curvature | Thickness or Air Gap | Effective Radius | Focal Length | Focal length |
|---|---|---|---|---|---|
| O (Object) | infinity | 900.000 | | | |
| S1(stp) | infinity | 0.350 | 0.730 | | |
| S2 | 1.790 | 0.468 | 0.881 | 3.486 | 1.510 |
| S3 | -613.255 | 0.091 | 0.917 | | |
| S4 | 19.465 | 0.190 | 0.915 | -5.981 | 1.671 |
| S5 | 3.346 | 0.243 | 0.900 | | |
| S6 | 5.808 | 0.266 | 0.956 | 17.358 | 1.544 |
| S7 | 14.737 | 0.086 | 1.008 | | |
| S8 | 2.047 | 0.190 | 1.120 | -387.884 | 1.671 |
| S9 | 1.955 | 0.216 | 1.158 | | |
| S10 | infinity | 0.100 | 1.345 | tunable | tunable |
| S11 | infinity | 0.250 | 1.388 | tunable | tunable |
| S12 | infinity | 0.170 | 1.521 | | |
| S13 | 3.933 | 0.475 | 1.702 | 4.778 | 1.544 |
| S14 | -7.438 | 0.465 | 1.858 | | |
| S15 | 1.004 | 0.350 | 2.164 | -4.346 | 1.544 |
| S16 | 0.619 | 0.403 | 2.485 | | |
| S17 | infinity | 0.110 | 2.586 | infinity | 1.517 |
| S18 | infinity | 0.319 | 2.619 | | |
| S19 | infinity | 0.009 | 2.785 | | |

Based on Equation 7, aspheric coefficients of the first to sixth lenses 710, 720, 730, 740, 750, and 760 may be listed in Tables 8 to 10.

[Table 8]

| Surface | S2 | S3 | S4 | S5 |
|---|---|---|---|---|
| K(Conic) | 8.634E-02 | -4.681E+40 | 8.831E+01 | -3.157E+01 |
| A(4th) | -1.858E-02 | -6.827E-02 | -1.293E-01 | -4.926E-02 |
| B(6th) | -1.673E-01 | 7.094E-01 | 1.574E+00 | 3.990E-01 |
| C(8th) | 9.710E-01 | -5.914E+00 | -9.257E+00 | 1.446E+00 |
| D(10th) | -4.697E+00 | 2.555E+01 | 3.242E+01 | -1.968E+01 |
| E(12th) | 1.395E+01 | -6.923E+01 | -7.100E+01 | 7.842E+01 |
| F(14th) | -2.646E+01 | 1.186E+02 | 9.735E+01 | -1.639E+02 |
| G(16th) | 3.018E+01 | -1.254E+02 | -8.036E+01 | 1.934E+02 |
| H(18th) | -1.874E+01 | 7.473E+01 | 3.619E+01 | -1.218E+02 |
| J(20th) | 4.803E+00 | -1.928E+01 | -6.768E+00 | 3.187E+01 |

[Table 9]

| Surface | S6 | S7 | S8 | S9 |
|---|---|---|---|---|
| K(Conic) | 0.000E+00 | 2.038E+02 | -8.895E+00 | 0.000E+00 |
| A(4th) | -1.530E-01 | -1.252E-01 | -5.275E-02 | -1.436E-01 |
| B(6th) | 2.566E-01 | 4.357E-01 | -5.308E-01 | -7.944E-01 |
| C(8th) | 1.738E-01 | -2.493E+00 | 1.824E-01 | 2.218E+00 |
| D(10th) | -4.655E+00 | 8.249E+00 | 3.634E+00 | -3.666E+00 |
| E(12th) | 1.583E+01 | -1.769E+01 | -1.207E+01 | 4.147E+00 |
| F(14th) | -2.826E+01 | 2.407E+01 | 1.973E+01 | -3.204E+00 |
| G(16th) | 2.921E+01 | -2.027E+01 | -1.866E+01 | 1.581E+00 |
| H(18th) | -1.620E+01 | 9.800E+00 | 9.716E+00 | -4.370E-01 |
| J(20th) | 3.717E+00 | -2.102E+00 | -2.157E+00 | 5.068E-02 |

[Table 10]

| Surface | S13 | S14 | S15 | S16 |
|---|---|---|---|---|
| K(Conic) | 0.000E+00 | -2.324E+01 | -7.257E+00 | -3.658E+00 |
| A(4th) | 8.613E-02 | -8.456E-02 | -3.043E-01 | -1.429E-01 |
| B(6th) | -1.233E-01 | 5.329E-01 | 6.442E-03 | 1.058E-02 |
| C(8th) | 1.911E-01 | -9.575E-01 | 1.843E-01 | 5.058E-02 |
| D(10th) | -3.094E-01 | 9.312E-01 | -1.703E-01 | -3.626E-02 |
| E(12th) | 3.080E-01 | -5.368E-01 | 8.046E-02 | 1.212E-02 |
| F(14th) | -1.771E-01 | 1.848E-01 | -2.206E-02 | -2.283E-03 |
| G(16th) | 5.735E-02 | -3.676E-02 | 3.517E-03 | 2.476E-04 |
| H(18th) | -9.721E-03 | 3.826E-03 | -3.023E-04 | -1.444E-05 |
| J(20th) | 6.728E-04 | -1.560E-04 | 1.084E-05 | 3.501E-07 |

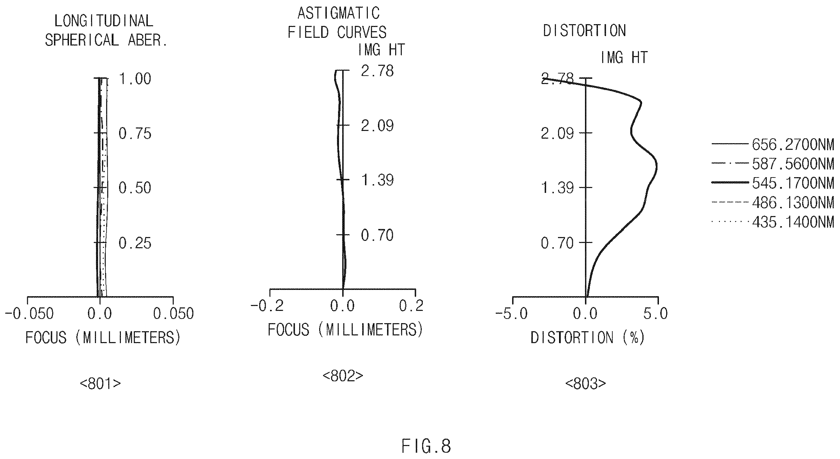

FIG. 8 is a view illustrating the spherical aberration, astigmatism, and distortion factor of the lens combination of FIG. 7.

Referring to FIG. 8, a first graph 801 may be a graph depicting the spherical aberration for the lens combination of FIG. 7 and may represent a change in longitudinal spherical aberration depending on a wavelength of light. The horizontal axis of the first graph 801 may represent the coefficient of the longitudinal spherical aberration, and the vertical axis of the first graph 801 may represent the normalized distance from the center of the optical axis. A second graph 802 may represent the astigmatism for the lens combination of FIG. 7. A third graph 803 may represent the distortion factor for the lens combination of FIG. 7. Referring to the graphs 801, 802, and 803 of FIG. 8, the lens combination of FIG. 7 may satisfy specified performance irrespective of the use of the variable lens 220.

FIG. 9 is a view illustrating another example of the configuration of the camera module according to an embodiment.

Referring to FIG. 9, the camera module 200 may include a first lens assembly (e.g., the first lens assembly 210), a variable lens 220, a second lens assembly (e.g., the second lens assembly 240), a filter 250, and an image sensor 260. The first lens assembly may include a first lens 910, a second lens 920, and a third lens 930. The second lens assembly may include a fourth lens 940, a fifth lens 950, and a sixth lens 960. An aperture stop 201 is disposed in a camera exposure region of a display device (the camera exposure region 110a). The aperture stop 201, the variable lens 220, and the first to sixth lenses 910, 920, 930, 940, 950, and 960 may be disposed with respect to the same optical axis.

According to an embodiment, the first lens 910, the third lens 930, and the fifth lens 950 may have a positive focal length. The second lens 920, the fourth lens 940, and the sixth lens 760 may have a negative focal length.

According to an embodiment, lens data for the lens combination of FIG. 9 may be listed in Table 11. In Table 11, O may indicate an object, S1 may indicate an aperture stop surface of the aperture stop 201, S2 to S16 may indicate surfaces of the lenses illustrated in FIG. 9, S17 and S18 may indicate surfaces of the filter 250 illustrated in FIG. 9, and S19 may indicate an image surface of the image sensor 260. For example, the lens combination of FIG. 9 may have a focal length of 3.29mm, an F-number of 2.28, an angle of view of 79.8 degrees, and a diagonal length of the image sensor 260 of 5.564 mm.

[Table 11]

| Surface | Radius of Curvature | Thickness or Air Gap | Effective Radius | Focal Length | Focal length |
|---|---|---|---|---|---|
| O (Object) | infinity | 900.000 | | | |
| S1(stp) | infinity | 0.350 | 0.730 | | |
| S2 | 1.920 | 0.412 | 0.904 | 4.172 | 1.510 |
| S3 | 17.604 | 0.121 | 0.924 | | |
| S4 | 4.216 | 0.198 | 0.937 | -8.660 | 1.671 |
| S5 | 2.409 | 0.195 | 0.929 | | |
| S6 | 3.856 | 0.280 | 0.969 | 11.652 | 1.544 |
| S7 | 9.523 | 0.102 | 1.021 | | |
| S8 | infinity | 0.101 | 1.075 | tunable | tunable |
| S9 | infinity | 0.300 | 1.097 | tunable | tunable |
| S10 | infinity | 0.208 | 1.176 | | |
| S11 | 2.623 | 0.193 | 1.252 | -14.640 | 1.671 |
| S12 | 2.014 | 0.188 | 1.432 | | |
| S13 | 3.794 | 0.644 | 1.638 | 4.655 | 1.544 |
| S14 | -7.259 | 0.264 | 1.899 | | |
| S15 | 1.044 | 0.433 | 2.321 | -6.488 | 1.544 |
| S16 | 0.689 | 0.523 | 2.625 | | |
| S17 | infinity | 0.111 | 2.671 | infinity | 1.517 |
| S18 | infinity | 0.210 | 2.699 | | |
| S19 | infinity | -0.004 | 2.784 | | |

Based on Equation 7, aspheric coefficients of the first to sixth lenses 910, 920, 930, 940, 950, and 960 may be listed in Tables 12 to 14.

[Table 12]

| Surface | S2 | S3 | S4 | S5 |
|---|---|---|---|---|
| K(Conic) | 2.201E-01 | -1.577E+02 | -9.081E+01 | -1.875E+01 |
| A(4th) | -1.258E-02 | -4.662E-02 | 4.256E-02 | 1.372E-01 |
| B(6th) | -1.075E-01 | -2.619E-01 | 6.387E-02 | -1.129E+00 |
| C(8th) | 1.020E-02 | 1.760E+00 | -3.375E+00 | 7.055E+00 |
| D(10th) | 2.143E+00 | -7.438E+00 | 2.039E+01 | -2.824E+01 |
| E(12th) | -1.124E+01 | 1.994E+01 | -6.034E+01 | 7.168E+01 |
| F(14th) | 2.697E+01 | -3.464E+01 | 1.015E+02 | -1.145E+02 |
| G(16th) | -3.500E+01 | 3.741E+01 | -9.840E+01 | 1.110E+02 |
| H(18th) | 2.379E+01 | -2.255E+01 | 5.134E+01 | -5.949E+01 |
| J(20th) | -6.650E+00 | 5.765E+00 | -1.118E+01 | 1.349E+01 |

[Table 13]

| Surface | S6 | S7 | S11 | S12 |
|---|---|---|---|---|
| K(Conic) | 0.000E+00 | 7.203E+01 | -5.177E+00 | 0.000E+00 |
| A(4th) | -2.465E-02 | -3.933E-02 | -6.238E-02 | -5.200E-02 |
| B(6th) | -4.532E-01 | -2.363E-01 | 7.127E-02 | -2.953E-01 |
| C(8th) | 1.196E+00 | 1.250E-01 | -1.112E+00 | -1.219E-01 |
| D(10th) | -1.652E+00 | 9.402E-01 | 3.662E+00 | 1.620E+00 |
| E(12th) | -4.570E-01 | -3.512E+00 | -6.078E+00 | -2.877E+00 |
| F(14th) | 5.566E+00 | 5.934E+00 | 5.842E+00 | 2.514E+00 |
| G(16th) | -8.823E+00 | -5.539E+00 | -3.330E+00 | -1.218E+00 |
| H(18th) | 6.336E+00 | 2.790E+00 | 1.051E+00 | 3.136E-01 |
| J(20th) | -1.786E+00 | -5.898E-01 | -1.425E-01 | -3.365E-02 |

[Table 14]

| Surface | S13 | S14 | S15 | S16 |
|---|---|---|---|---|
| K(Conic) | 0.000E+00 | -1.442E+01 | -5.262E+00 | -3.108E+00 |
| A(4th) | 2.520E-01 | -1.134E-01 | -3.238E-01 | -2.285E-01 |
| B(6th) | -1.086E+00 | 3.029E-01 | 2.529E-01 | 2.805E-01 |
| C(8th) | 2.204E+00 | -2.078E-01 | -1.097E-01 | -2.212E-01 |
| D(10th) | -2.550E+00 | 1.185E-02 | 1.646E-02 | 1.056E-01 |
| E(12th) | 1.760E+00 | 5.655E-02 | 4.553E-03 | -3.124E-02 |
| F(14th) | -7.380E-01 | -3.457E-02 | -2.337E-03 | 5.740E-03 |
| G(16th) | 1.839E-01 | 9.568E-03 | 4.024E-04 | -6.357E-04 |
| H(18th) | -2.497E-02 | -1.314E-03 | -3.227E-05 | 3.879E-05 |
| J(20th) | 1.422E-03 | 7.183E-05 | 1.013E-06 | -1.000E-06 |

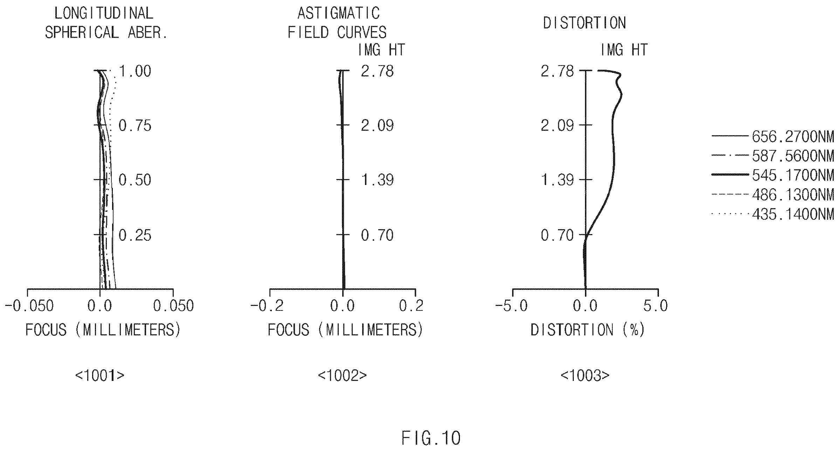

FIG. 10 is a view illustrating the spherical aberration, astigmatism, and distortion factor of the lens combination of FIG. 9.

Referring to FIG. 10, a first graph 1001 may be a graph depicting the spherical aberration for the lens combination of FIG. 9 and may represent a change in longitudinal spherical aberration depending on a wavelength of light. The horizontal axis of the first graph 1001 may represent the coefficient of the longitudinal spherical aberration, and the vertical axis of the first graph 1001 may represent the normalized distance from the center of the optical axis. A second graph 1002 may represent the astigmatism for the lens combination of FIG. 9. A third graph 1003 may represent the distortion factor for the lens combination of FIG. 9. Referring to the graphs 1001, 1002, and 1003 of FIG. 10, the lens combination of FIG. 9 may satisfy specified performance irrespective of the use of the variable lens 220.

FIG. 11 is a view illustrating another example of the configuration of the camera module according to an embodiment.

Referring to FIG. 11, the camera module 200 may include a first lens assembly (e.g., the first lens assembly 210), a variable lens 220, a second lens assembly (e.g., the second lens assembly 240), a filter 250, and an image sensor 260. The first lens assembly may include a first lens 1110 and a second lens 1120. The second lens assembly may include a third lens 1130, a fourth lens 1140, a fifth lens 1150, and a sixth lens 1160. An aperture stop 201 is disposed in a camera exposure region of a display device (the camera exposure region 110a). The aperture stop 201, the variable lens 220, and the first to sixth lenses 1110, 1120, 1130, 1140, 1150, and 1160 may be disposed with respect to the same optical axis.

According to an embodiment, the first lens 1110, the third lens 1130, and the fifth lens 1150 may have a positive focal length. The second lens 1120, the fourth lens 1140, and the sixth lens 1160 may have a negative focal length.

According to an embodiment, lens data for the lens combination of FIG. 11 may be listed in Table 15. In Table 15, O may indicate an object, S1 may indicate an aperture stop surface of the aperture stop 201, S2 to S16 may indicate surfaces of the lenses illustrated in FIG. 11, S17 and S18 may indicate surfaces of the filter 250 illustrated in FIG. 11, and S19 may indicate an image surface of the image sensor 260. For example, the lens combination of FIG. 11 may have a focal length of 3.29mm, an F-number of 2.28, an angle of view of 79.8 degrees, and a diagonal length of the image sensor 260 of 5.564 mm.

[Table 15]

| Surface | Radius of Curvature | Thickness or Air Gap | Effective Radius | Focal Length | Focal length |
|---|---|---|---|---|---|
| O (Object) | infinity | 900.000 | | | |
| S1(stp) | infinity | 0.350 | 0.730 | | |
| S2 | 1.827 | 0.429 | 0.881 | 3.551 | 1.510 |
| S3 | -375.205 | 0.064 | 0.903 | | |
| S4 | 200.499 | 0.190 | 0.907 | -11.583 | 1.671 |
| S5 | 7.564 | 0.211 | 0.900 | | |
| S6 | infinity | 0.100 | 0.956 | tunable | tunable |
| S7 | infinity | 0.250 | 0.979 | tunable | tunable |
| S8 | infinity | 0.181 | 1.048 | | |
| S9 | 16.225 | 0.308 | 1.104 | -164.551 | 1.5441 |
| S10 | 13.653 | 0.033 | 1.136 | | |
| S11 | 2.212 | 0.190 | 1.150 | -13.013 | 1.6607 |
| S12 | 1.703 | 0.185 | 1.321 | | |
| S13 | 2.695 | 0.558 | 1.525 | 4.646 | 1.5441 |
| S14 | -40.788 | 0.455 | 1.848 | | |
| S15 | 0.951 | 0.403 | 2.185 | -6.589 | 1.5441 |
| S16 | 0.640 | 0.402 | 2.420 | | |
| S17 | infinity | 0.110 | 2.541 | infinity | 1.5168 |
| S18 | infinity | 0.348 | 2.579 | | |
| S19 | infinity | 0.010 | 2.782 | | |

Based on Equation 7, aspheric coefficients of the first to sixth lenses 1110, 1120, 1130, 1140, 1150, and 1160 may be listed in Tables 16 to 18.

[Table 16]

| Surface | S2 | S3 | S4 | S5 |
|---|---|---|---|---|
| K(Conic) | 3.1456E-01 | -6.8016E+34 | -3.7017E+06 | -6.1201E+01 |
| A(4th) | -1.8606E-02 | -8.7634E-02 | -6.1297E-02 | -5.7649E-02 |
| B(6th) | -1.5690E-01 | 1.0727E-01 | 1.3097E-01 | 9.4641E-01 |
| C(8th) | 9.9728E-01 | 6.0061E-01 | 4.5192E-01 | -8.0778E+00 |
| D(10th) | -5.3459E+00 | -5.8455E+00 | -2.3797E+00 | 4.2143E+01 |
| E(12th) | 1.8991E+01 | 2.1442E+01 | 3.3872E+00 | -1.3168E+02 |
| F(14th) | -4.4332E+01 | -4.6572E+01 | -4.3873E-01 | 2.4851E+02 |
| G(16th) | 6.3406E+01 | 6.1958E+01 | -2.0917E+00 | -2.7761E+02 |
| H(18th) | -4.9915E+01 | -4.6077E+01 | 5.1747E-01 | 1.6902E+02 |
| J(20th) | 1.6439E+01 | 1.4489E+01 | 5.4144E-01 | -4.3234E+01 |

[Table 17]

| Surface | S6 | S7 | S11 | S12 |
|---|---|---|---|---|
| K(Conic) | 0.0000E+00 | 1.1811E+02 | -4.4745E+00 | 0.0000E+00 |
| A(4th) | -8.7453E-02 | -6.1413E-02 | -5.6352E-02 | -6.3601E-02 |
| B(6th) | 7.5682E-02 | 1.7007E-01 | -5.5947E-02 | -6.1086E-01 |
| C(8th) | -5.4640E-03 | -1.8693E+00 | -2.2075E+00 | 2.6455E-01 |
| D(10th) | -4.5309E-01 | 6.7818E+00 | 9.7893E+00 | 2.5526E+00 |
| E(12th) | 1.2481E+00 | -1.3730E+01 | -1.9917E+01 | -6.4278E+00 |
| F(14th) | -1.8375E+00 | 1.6289E+01 | 2.2573E+01 | 7.2577E+00 |
| G(16th) | 1.6086E+00 | -1.1280E+01 | -1.4715E+01 | -4.4267E+00 |
| H(18th) | -7.5528E-01 | 4.2492E+00 | 5.1922E+00 | 1.4144E+00 |
| J(20th) | 1.4584E-01 | -6.7558E-01 | -7.7512E-01 | -1.8593E-01 |

[Table 18]

| Surface | S13 | S14 | S15 | S16 |
|---|---|---|---|---|
| K(Conic) | 0.0000E+00 | 9.4821E+01 | -5.1594E+00 | -3.5280E+00 |
| A(4th) | 2.8871E-01 | -1.1130E-01 | -3.1707E-01 | -1.7100E-01 |
| B(6th) | -1.4005E+00 | 5.4604E-01 | -1.3221E-02 | 7.8622E-02 |
| C(8th) | 3.7834E+00 | -6.8027E-01 | 3.0514E-01 | -1.6979E-02 |
| D(10th) | -5.9601E+00 | 4.4608E-01 | -3.1082E-01 | -1.7644E-04 |
| E(12th) | 5.5805E+00 | -1.7186E-01 | 1.5689E-01 | -2.1292E-04 |
| F(14th) | -3.1684E+00 | 3.2629E-02 | -4.5049E-02 | 4.9264E-04 |
| G(16th) | 1.0669E+00 | 1.3074E-04 | 7.4623E-03 | -1.4187E-04 |
| H(18th) | -1.9562E-01 | -1.0657E-03 | -6.6569E-04 | 1.6015E-05 |
| J(20th) | 1.5043E-02 | 1.1799E-04 | 2.4813E-05 | -6.5576E-07 |

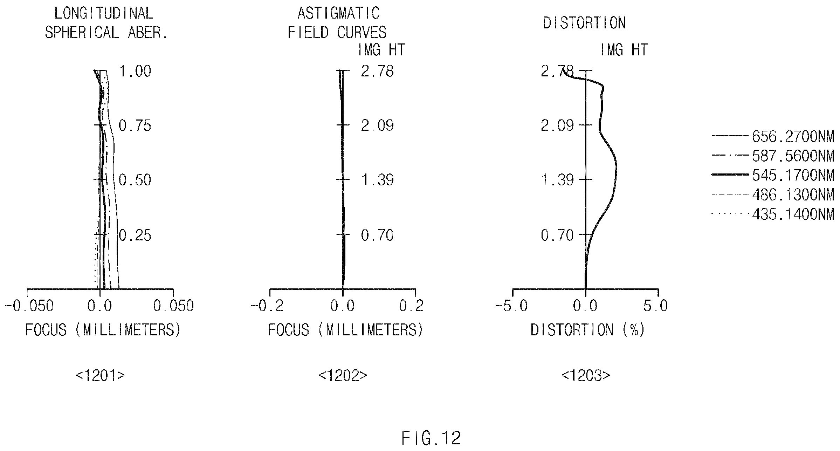

FIG. 12 is a view illustrating the spherical aberration, astigmatism, and distortion factor of the lens combination of FIG. 11.

Referring to FIG. 12, a first graph 1201 may be a graph depicting the spherical aberration for the lens combination of FIG. 11 and may represent a change in longitudinal spherical aberration depending on a wavelength of light. The horizontal axis of the first graph 1201 may represent the coefficient of the longitudinal spherical aberration, and the vertical axis of the first graph 1201 may represent the normalized distance from the center of the optical axis. A second graph 1202 may represent the astigmatism for the lens combination of FIG. 11. A third graph 1203 may represent the distortion factor for the lens combination of FIG. 11. Referring to the graphs 1201, 1202, and 1203 of FIG. 12, the lens combination of FIG. 11 may satisfy specified performance irrespective of the use of the variable lens 220.

FIG. 13 is a block diagram illustrating an electronic device 1301 in a network environment 1300 according to various embodiments.

Referring to FIG. 13, the electronic device 1301 in the network environment 1300 may communicate with an electronic device 1302 via a first network 1398 (e.g., a short-range wireless communication network), or at least one of an electronic device 1304 or a server 1308 via a second network 1399 (e.g., a long-range wireless communication network). According to an embodiment, the electronic device 1301 may communicate with the electronic device 1304 via the server 1308. According to an embodiment, the electronic device 1301 may include a processor 1320, memory 1330, an input module 1350, a sound output module 1355, a display module 1360, an audio module 1370, a sensor module 1376, an interface 1377, a connecting terminal 1378, a haptic module 1379, a camera module 1380, a power management module 1388, a battery 1389, a communication module 1390, a subscriber identification module (SIM) 1396, or an antenna module 1397. In some embodiments, at least one of the components (e.g., the connecting terminal 1378) may be omitted from the electronic device 1301, or one or more other components may be added in the electronic device 1301. In some embodiments, some of the components (e.g., the sensor module 1376, the camera module 1380, or the antenna module 1397) may be implemented as a single component (e.g., the display module 1360).

The processor 1320 may execute, for example, software (e.g., a program 1340) to control at least one other component (e.g., a hardware or software component) of the electronic device 1301 coupled with the processor 1320, and may perform various data processing or computation. According to one embodiment, as at least part of the data processing or computation, the processor 1320 may store a command or data received from another component (e.g., the sensor module 1376 or the communication module 1390) in volatile memory 1332, process the command or the data stored in the volatile memory 1332, and store resulting data in non-volatile memory 1334. According to an embodiment, the processor 1320 may include a main processor 1321 (e.g., a central processing unit (CPU) or an application processor (AP)), or an auxiliary processor 1323 (e.g., a graphics processing unit (GPU), a neural processing unit (NPU), an image signal processor (ISP), a sensor hub processor, or a communication processor (CP)) that is operable independently from, or in conjunction with, the main processor 1321. For example, when the electronic device 1301 includes the main processor 1321 and the auxiliary processor 1323, the auxiliary processor 1323 may be adapted to consume less power than the main processor 1321, or to be specific to a specified function. The auxiliary processor 1323 may be implemented as separate from, or as part of the main processor 1321.

The auxiliary processor 1323 may control at least some of functions or states related to at least one component (e.g., the display module 1360, the sensor module 1376, or the communication module 1390) among the components of the electronic device 1301, instead of the main processor 1321 while the main processor 1321 is in an inactive (e.g., sleep) state, or together with the main processor 1321 while the main processor 1321 is in an active state (e.g., executing an application). According to an embodiment, the auxiliary processor 1323 (e.g., an image signal processor or a communication processor) may be implemented as part of another component (e.g., the camera module 1380 or the communication module 1390) functionally related to the auxiliary processor 1323. According to an embodiment, the auxiliary processor 1323 (e.g., the neural processing unit) may include a hardware structure specified for artificial intelligence model processing. An artificial intelligence model may be generated by machine learning. Such learning may be performed, e.g., by the electronic device 1301 where the artificial intelligence is performed or via a separate server (e.g., the server 1308). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1330 may store various data used by at least one component (e.g., the processor 1320 or the sensor module 1376) of the electronic device 1301. The various data may include, for example, software (e.g., the program 1340) and input data or output data for a command related thereto. The memory 1330 may include the volatile memory 1332 or the non-volatile memory 1334.

The program 1340 may be stored in the memory 1330 as software, and may include, for example, an operating system (OS) 1342, middleware 1344, or an application 1346.

The input module 1350 may receive a command or data to be used by another component (e.g., the processor 1320) of the electronic device 1301, from the outside (e.g., a user) of the electronic device 1301. The input module 1350 may include, for example, a microphone, a mouse, a keyboard, a key (e.g., a button), or a digital pen (e.g., a stylus pen).

The sound output module 1355 may output sound signals to the outside of the electronic device 1301. The sound output module 1355 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1360 may visually provide information to the outside (e.g., a user) of the electronic device 1301. The display module 1360 may include, for example, a display, a hologram device, or a projector and control circuitry to control a corresponding one of the display, hologram device, and projector. According to an embodiment, the display module 1360 may include a touch sensor adapted to detect a touch, or a pressure sensor adapted to measure the intensity of force incurred by the touch.

The audio module 1370 may convert a sound into an electrical signal and vice versa. According to an embodiment, the audio module 1370 may obtain the sound via the input module 1350, or output the sound via the sound output module 1355 or a headphone of an external electronic device (e.g., an electronic device 1302) directly (e.g., wiredly) or wirelessly coupled with the electronic device 1301.

The sensor module 1376 may detect an operational state (e.g., power or temperature) of the electronic device 1301 or an environmental state (e.g., a state of a user) external to the electronic device 1301, and then generate an electrical signal or data value corresponding to the detected state. According to an embodiment, the sensor module 1376 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1377 may support one or more specified protocols to be used for the electronic device 1301 to be coupled with the external electronic device (e.g., the electronic device 1302) directly (e.g., wiredly) or wirelessly. According to an embodiment, the interface 1377 may include, for example, a high definition multimedia interface (HDMI), a universal serial bus (USB) interface, a secure digital (SD) card interface, or an audio interface.

A connecting terminal 1378 may include a connector via which the electronic device 1301 may be physically connected with the external electronic device (e.g., the electronic device 1302). According to an embodiment, the connecting terminal 1378 may include, for example, a HDMI connector, a USB connector, a SD card connector, or an audio connector (e.g., a headphone connector).

The haptic module 1379 may convert an electrical signal into a mechanical stimulus (e.g., a vibration or a movement) or electrical stimulus which may be recognized by a user via his tactile sensation or kinesthetic sensation. According to an embodiment, the haptic module 1379 may include, for example, a motor, a piezoelectric element, or an electric stimulator.

The camera module 1380 may capture a still image or moving images. According to an embodiment, the camera module 1380 may include one or more lenses, image sensors, image signal processors, or flashes.

The power management module 1388 may manage power supplied to the electronic device 1301. According to one embodiment, the power management module 1388 may be implemented as at least part of, for example, a power management integrated circuit (PMIC).

The battery 1389 may supply power to at least one component of the electronic device 1301. According to an embodiment, the battery 1389 may include, for example, a primary cell which is not rechargeable, a secondary cell which is rechargeable, or a fuel cell.

The communication module 1390 may support establishing a direct (e.g., wired) communication channel or a wireless communication channel between the electronic device 1301 and the external electronic device (e.g., the electronic device 1302, the electronic device 1304, or the server 1308) and performing communication via the established communication channel. The communication module 1390 may include one or more communication processors that are operable independently from the processor 1320 (e.g., the application processor (AP)) and supports a direct (e.g., wired) communication or a wireless communication. According to an embodiment, the communication module 1390 may include a wireless communication module 1392 (e.g., a cellular communication module, a short-range wireless communication module, or a global navigation satellite system (GNSS) communication module) or a wired communication module 1394 (e.g., a local area network (LAN) communication module or a power line communication (PLC) module). A corresponding one of these communication modules may communicate with the external electronic device via the first network 1398 (e.g., a short-range communication network, such as Bluetooth™, wireless-fidelity (Wi-Fi) direct, or infrared data association (IrDA)) or the second network 1399 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1392 may identify and authenticate the electronic device 1301 in a communication network, such as the first network 1398 or the second network 1399, using subscriber information (e.g., international mobile subscriber identity (IMSI)) stored in the subscriber identification module 1396.

The wireless communication module 1392 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1392 may support a high-frequency band (e.g., the mmWave band) to achieve, e.g., a high data transmission rate. The wireless communication module 1392 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1392 may support various requirements specified in the electronic device 1301, an external electronic device (e.g., the electronic device 1304), or a network system (e.g., the second network 1399). According to an embodiment, the wireless communication module 1392 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1397 may transmit or receive a signal or power to or from the outside (e.g., the external electronic device) of the electronic device 1301. According to an embodiment, the antenna module 1397 may include an antenna including a radiating element composed of a conductive material or a conductive pattern formed in or on a substrate (e.g., a printed circuit board (PCB)). According to an embodiment, the antenna module 1397 may include a plurality of antennas (e.g., array antennas). In such a case, at least one antenna appropriate for a communication scheme used in the communication network, such as the first network 1398 or the second network 1399, may be selected, for example, by the communication module 1390 (e.g., the wireless communication module 1392) from the plurality of antennas. The signal or the power may then be transmitted or received between the communication module 1390 and the external electronic device via the selected at least one antenna. According to an embodiment, another component (e.g., a radio frequency integrated circuit (RFIC)) other than the radiating element may be additionally formed as part of the antenna module 1397.

According to various embodiments, the antenna module 1397 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1301 and the external electronic device 1304 via the server 1308 coupled with the second network 1399. Each of the electronic devices 1302 or 1304 may be a device of a same type as, or a different type, from the electronic device 1301. According to an embodiment, all or some of operations to be executed at the electronic device 1301 may be executed at one or more of the external electronic devices 1302, 1304, or 1308. For example, if the electronic device 1301 should perform a function or a service automatically, or in response to a request from a user or another device, the electronic device 1301, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1301. The electronic device 1301 may provide the outcome, with or without further processing of the outcome, as at least part of a reply to the request. To that end, a cloud computing, distributed computing, mobile edge computing (MEC), or client-server computing technology may be used, for example. The electronic device 1301 may provide ultra-low-latency services using, e.g., distributed computing or mobile edge computing. In another embodiment, the external electronic device 1304 may include an internet-of-things (IoT) device. The server 1308 may be an intelligent server using machine learning and/or a neural network. According to an embodiment, the external electronic device 1304 or the server 1308 may be included in the second network 1399. The electronic device 1301 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1340) including one or more instructions that are stored in a storage medium (e.g., internal memory 1336 or external memory 1338) that is readable by a machine (e.g., the electronic device 1301). For example, a processor (e.g., the processor 1320) of the machine (e.g., the electronic device 1301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

**Claims**

1. An electronic device (100) comprising:

   a camera module (200) including at least one lens; and
   a display (120) including a camera exposure region (110a) configured to at least partially overlap the at least one lens when viewed in a direction corresponding to an optical axis of the at least one lens;
   wherein the display (120) includes an aperture stop (201) disposed in the camera exposure region (110a),
   wherein the camera module (200) includes:

   a variable lens (220) having a curvature changed based on supplied electrical energy;
   a first lens (212) disposed between the display (120) and the variable lens (220), the first lens (212) having a positive focal length; and
   a second lens (212) disposed farther away from the display (120) than the first lens (212), the second lens (212) having a negative focal length, and
   wherein a first distance (L1) from the aperture stop (201) to a lens surface of the variable lens (220) closest to the display (120) is smaller than or equal to twice a second distance (L2) from a lens surface of the first lens (212) closest to the display (120) to the lens surface of the variable lens (220).

2. The electronic device of claim 1, wherein the second lens (212) is disposed between the first lens (212) and the variable lens (220), and
   wherein the camera module (200) further includes a third lens (242) disposed farther away from the display (120) than the variable lens (220), the third lens (242) having a negative focal length.

3. The electronic device of claim 1 or 2, wherein the first distance (L1) is designated as a distance from the aperture stop (201) to a lens surface closest to the aperture stop (201) among lens surfaces of the variable lens (220).

4. The electronic device of any one of the previous claims, wherein the second distance (L2) is designated as a distance from a lens surface closest to the aperture stop (201) among lens surfaces of the first lens (212) to a lens surface closest to the first lens (212) among lens surfaces of the variable lens (220).

5. The electronic device of any one of the previous claims, wherein a ratio between the first distance (L1) and the second distance (L2) is set to have a magnitude between 1.1 and 2.0.

6. The electronic device of any one of the previous claims, wherein the aperture stop (201) has a diameter smaller than an effective diameter of the variable lens (220).

7. The electronic device of any one of the previous claims, wherein the camera module (200) further includes an image sensor (260) configured to obtain an image by the at least one lens, and
wherein a ratio between an effective diameter of the first lens (212) and a diagonal length of the image sensor (260) is greater than or equal to a first value and smaller than a second value.

8. The electronic device of claim 7, wherein the first distance (L1) is smaller than twice the diagonal length of the image sensor (260).

9. The electronic device of claim 7 or 8, wherein a ratio between a thickness of a center of the variable lens (220) and a distance from the aperture stop (201) to the image sensor (260) is greater than or equal to a third value and smaller than or equal to a fourth value.

10. The electronic device of any one of the previous claims, wherein a composite focal length of the camera module (200) is smaller than three times a focal length of a lens having the highest refractive index among the at least one lens.

11. The electronic device of any one of the previous claims, wherein the at least one lens includes four or more lenses.

12. The electronic device of claim 11, wherein the at least one lens includes at least three injection-molded plastic aspheric lenses.

13. The electronic device of any one of the previous claims, wherein the camera module (200) includes one or more aspheric lenses including at least one point of inflection.

14. The electronic device of claim 2, further comprising:

    a first lens assembly (210) including the first lens (212);
    a second lens assembly (240) including the third lens (242);
    wherein the variable lens (220) is disposed between the first lens assembly (210) and the second lens assembly (240).

15. The electronic device of claims 7 and 14, wherein
the image sensor (260) is configured to obtain an image formed by at least one lens (212) included in the first lens assembly (210), the variable lens (220), and at least one lens (242) included in the second lens assembly (240).


**Patentansprüche**

1. Elektronische Vorrichtung (100), die Folgendes umfasst:

    ein Kameramodul (200) mit zumindest einer Linse; und
    eine Anzeige (120) mit einem Kameraöffnungsbereich (110a), der so konfiguriert ist, dass er die zumindest eine Linse zumindest teilweise überlappt bei Betrachtung in einer Richtung, die einer optischen Achse der zumindest einen Linse entspricht;
    wobei die Anzeige (120) eine Öffnungsblende (201) einschließt, die in dem Kameraöffnungsbereich (110a) angeordnet ist,
    wobei das Kameramodul (200) Folgendes einschließt:

eine variable Linse (220), deren Krümmung basierend auf zugeführter elektrischer Energie geändert wird;

eine erste Linse (212), die zwischen der Anzeige (120) und der variablen Linse (220) angeordnet ist, wobei die erste Linse (212) eine positive Brennweite aufweist; und

eine zweite Linse (212), die weiter von der Anzeige (120) entfernt angeordnet ist als die erste Linse (212), wobei die zweite Linse (212) eine negative Brennweite aufweist, und

wobei ein erster Abstand (L1) von der Öffnungsblende (201) zu einer Linsenoberfläche der variablen Linse (220), die der Anzeige (120) am nächsten ist, kleiner oder gleich dem Zweifachen eines zweiten Abstandes (L2) von einer Linsenoberfläche der ersten Linse (212), die der Anzeige (120) am nächsten ist, zu der Linsenoberfläche der variablen Linse (220) ist.

2. Elektronische Vorrichtung nach Anspruch 1, wobei die zweite Linse (212) zwischen der ersten Linse (212) und der variablen Linse (220) angeordnet ist, und

wobei das Kameramodul (200) ferner eine dritte Linse (242) einschließt, die weiter von der Anzeige (120) entfernt angeordnet ist als die variable Linse (220), wobei die dritte Linse (242) eine negative Brennweite aufweist.

3. Elektronische Vorrichtung nach Anspruch 1 oder 2, wobei der erste Abstand (L1) als ein Abstand von der Öffnungsblende (201) zu einer der Öffnungsblende (201) am nächsten liegenden Linsenoberfläche unter Linsenoberflächen der variablen Linse (220) vorgesehen ist.

4. Elektronische Vorrichtung nach einem der vorhergehenden Ansprüche, wobei der zweite Abstand (L2) als ein Abstand von einer der Öffnungsblende (201) am nächsten liegenden Linsenoberfläche unter den Linsenoberflächen der ersten Linse (212) zu einer der ersten Linse (212) am nächsten liegenden Linsenoberfläche unter den Linsenoberflächen der variablen Linse (220) vorgesehen ist.

5. Elektronische Vorrichtung nach einem der vorhergehenden Ansprüche, wobei ein Verhältnis zwischen dem ersten Abstand (L1) und dem zweiten Abstand (L2) so eingestellt ist, dass es eine Größenordnung zwischen 1,1 und 2,0 aufweist.

6. Elektronische Vorrichtung nach einem der vorhergehenden Ansprüche, wobei die Öffnungsblende (201) einen Durchmesser aufweist, der kleiner ist als ein effektiver Durchmesser der variablen Linse (220).

7. Elektronische Vorrichtung nach einem der vorhergehenden Ansprüche, wobei das Kameramodul (200) ferner einen Bildsensor (260) einschließt, der konfiguriert ist, um ein Bild durch die zumindest eine Linse zu erhalten, und wobei ein Verhältnis zwischen einem effektiven Durchmesser der ersten Linse (212) und einer diagonalen Länge des Bildsensors (260) größer oder gleich einem ersten Wert und kleiner als ein zweiter Wert ist.

8. Elektronische Vorrichtung nach Anspruch 7, wobei der erste Abstand (L1) kleiner ist als das Doppelte der diagonalen Länge des Bildsensors (260).

9. Elektronische Vorrichtung nach Anspruch 7 oder 8, wobei ein Verhältnis zwischen einer Dicke einer Mitte der variablen Linse (220) und einem Abstand von der Öffnungsblende (201) zum Bildsensor (260) größer oder gleich einem dritten Wert und kleiner oder gleich einem vierten Wert ist.

10. Elektronische Vorrichtung nach einem der vorhergehenden Ansprüche, wobei eine zusammengesetzte Brennweite des Kameramoduls (200) kleiner ist als das Dreifache einer Brennweite einer Linse unter der zumindest einen Linse mit dem höchsten Brechungsindex.

11. Elektronische Vorrichtung nach einem der vorhergehenden Ansprüche, wobei die zumindest eine Linse vier oder mehr Linsen einschließt.

12. Elektronische Vorrichtung nach Anspruch 11, wobei die zumindest eine Linse zumindest drei asphärische Linsen aus spritzgegossenem Kunststoff einschließt.

13. Elektronische Vorrichtung nach einem der vorhergehenden Ansprüche, wobei das Kameramodul (200) eine oder mehrere asphärische Linsen einschließt, die zumindest einen Biegepunkt aufweisen.

14. Elektronische Vorrichtung nach Anspruch 2, die ferner Folgendes umfasst:

eine erste Linsenanordnung (210), die die erste Linse (212) einschließt;

eine zweite Linsenanordnung (240), die die dritte Linse (242) einschließt;

wobei die variable Linse (220) zwischen der ersten Linsenanordnung (210) und der zweiten Linsenanordnung (240) angeordnet ist.

15. Elektronische Vorrichtung nach den Ansprüchen 7 und 14, wobei der Bildsensor (260) konfiguriert ist, um ein Bild zu erhalten, das durch zumindest eine in der ersten Linsenanordnung (210) enthaltene Linse (212), die variable Linse (220) und zumindest eine in der zweiten Linsenanordnung (240) enthaltene Linse (242) gebildet wird.

## Revendications

1. Appareil électronique (100) comprenant :

un module de caméra (200) comprenant au moins une lentille, et

un écran (120) comprenant une zone d'exposition de caméra (110a) conçue pour chevaucher au moins partiellement l'au moins une lentille, vu dans une direction correspondant à un axe optique de l'au moins une lentille ;

ledit écran (120) comprenant un diaphragme d'ouverture (201) disposé dans la zone d'exposition de caméra (110a) ;

ledit module de caméra (200) comprenant :

une lentille variable (220) dont la courbure varie en fonction d'une énergie électrique fournie,

une première lentille (212) disposée entre l'écran (120) et la lentille variable (220), la première lentille (212) ayant une distance focale positive, et

une deuxième lentille (212) disposée plus loin de l'écran (120) que la première lentille (212), la deuxième lentille (212) ayant une distance focale négative ; et

une première distance (L1) allant du diaphragme d'ouverture (201) jusqu'à une surface de la lentille variable (220) la plus proche de l'écran (120) étant inférieure ou égale à deux fois une deuxième distance (L2) allant d'une surface de la première lentille (212) la plus proche de l'écran (120) jusqu'à la surface de la lentille variable (220).

2. Appareil électronique selon la revendication **1,** dans lequel la deuxième lentille (212) est disposée entre la première lentille (212) et la lentille variable (220), et

dans lequel le module de caméra (200) comprend en outre une troisième lentille (242) disposée plus loin de l'écran (120) que la lentille variable (220), la troisième lentille (242) ayant une distance focale négative.

3. Appareil électronique selon la revendication 1 ou 2, dans lequel la première distance (L1) est désignée comme une distance allant du diaphragme d'ouverture (201) jusqu'à celle des surfaces de la lentille variable (220) qui est la plus proche du diaphragme d'ouverture (201).

4. Appareil électronique selon l'une quelconque des revendications précédentes, dans lequel la deuxième distance (L2) est désignée comme une distance allant de celle des surfaces de la première lentille (212) qui est la plus proche du diaphragme d'ouverture (201) jusqu'à celle des surfaces de la lentille variable (220) qui est la plus proche de la première lentille (212).

5. Appareil électronique selon l'une quelconque des revendications précédentes, dans lequel un rapport entre la première distance (L1) et la deuxième distance (L2) est établi pour avoir une grandeur comprise entre 1,1 et 2,0.

6. Appareil électronique selon l'une quelconque des revendications précédentes, dans lequel le diaphragme d'ouverture (201) a un diamètre inférieur au diamètre effectif de la lentille variable (220).

7. Appareil électronique selon l'une quelconque des revendications précédentes, dans lequel le module de caméra (200) comprend en outre un capteur d'image (260) conçu pour obtenir une image par le biais de l'au moins une lentille, et

dans lequel un rapport entre le diamètre effectif de la première lentille (212) et la longueur diagonale du capteur d'image (260) est supérieur ou égal à une première valeur et inférieur à une deuxième valeur.

8. Appareil électronique selon la revendication 7, dans lequel la première distance (L1) est inférieure à deux fois la longueur diagonale du capteur d'image (260).

9. Appareil électronique selon la revendication 7 ou 8, dans lequel le rapport entre l'épaisseur du centre de la lentille variable (220) et la distance allant du diaphragme d'ouverture (201) jusqu'au capteur d'image (260) est supérieur ou égal à une troisième valeur et inférieur ou égal à une quatrième valeur.

10. Appareil électronique selon l'une quelconque des revendications précédentes, dans lequel la distance focale composite du module de caméra (200) est inférieure à trois fois la distance focale de celle des lentilles, parmi ladite au moins une lentille, qui a l'indice de réfraction le plus élevé.

11. Appareil électronique selon l'une quelconque des revendications précédentes, dans lequel l'au moins une lentille comprend quatre lentilles ou plus.

12. Appareil électronique selon la revendication 11, dans lequel l'au moins une lentille comprend au moins trois lentilles asphériques en plastique moulé par injection.

13. Appareil électronique selon l'une quelconque des revendications précédentes, dans lequel le module de caméra (200) comprend une ou plusieurs lentilles asphériques présentant au moins un point d'inflexion.

14. Appareil électronique selon la revendication 2, comprenant en outre :

    un premier ensemble de lentilles (210) comprenant la première lentille (212),
    un deuxième ensemble de lentilles (240) comprenant la troisième lentille (242) ;
    ladite lentille variable (220) étant disposée entre le premier ensemble de lentilles (210) et le deuxième ensemble de lentilles (240).

15. Appareil électronique selon les revendications 7 et 14, dans lequel
le capteur d'image (260) est conçu pour obtenir une image formée par au moins une lentille (212) présente dans le premier ensemble de lentilles (210), la lentille variable (220) et au moins une lentille (242) présente dans le deuxième ensemble de lentilles (240).

FIG.1

FIG.2

FIG. 3

410    110a

110 ⎯

120 ⎯
130 ⎯

201

<401>

420a    420b    110a

110 ⎯

120 ⎯
130 ⎯

201

<402>

430    110a

110 ⎯

120 ⎯
130 ⎯

201

<403>

F I G . 4

FIG.5

FIG.6

FIG.7

FIG.8

FIG.9

LONGITUDINAL
SPHERICAL ABER.

1.00

0.75

0.50

0.25

-0.050   0.0   0.050
FOCUS (MILLIMETERS)

<1001>

ASTIGMATIC
FIELD CURVES
IMG HT

2.78

2.09

1.39

0.70

-0.2   0.0   0.2
FOCUS (MILLIMETERS)

<1002>

DISTORTION
IMG HT

2.78

2.09

1.39

0.70

-5.0   0.0   5.0
DISTORTION (%)

<1003>

———— 656.2700NM
—·— 587.5600NM
━━━━ 545.1700NM
------ 486.1300NM
········ 435.1400NM

FIG.10

FIG.11

FIG.12

1300

ELECTRONIC DEVICE 1301

MEMORY 1330

VOLATILE MEMORY 1332

NON-VOLATILE MEMORY 1334

INTERNAL MEMORY 1336

EXTERNAL MEMORY 1338

INPUT MODULE 1350

DISPLAY MODULE 1360

SOUND OUTPUT MODULE 1355

PROGRAM 1340

APPLICATION 1346

MIDDLEWARE 1344

OPERATING SYSTEM 1342

PROCESSOR 1320

COMMUNICATION MODULE 1390

BATTERY 1389

MAIN PROCESSOR 1321

WIRELESS COMMUNICATION MODULE 1392

WIRED COMMUNICATION MODULE 1394

SECOND NETWORK 1399

ELECTRONIC DEVICE 1304

POWER MANAGEMENT MODULE 1388

AUXILIARY PROCESSOR 1323

SUBSCRIBER IDENTIFICATION MODULE 1396

ANTENNA MODULE 1397

FIRST NETWORK 1398

AUDIO MODULE 1370

SENSOR MODULE 1376

INTERFACE 1377

CONNECTING TERMINAL 1378

ELECTRONIC DEVICE 1302

SERVER 1308

HAPTIC MODULE 1379

CAMERA MODULE 1380

FIG.13

**EP 4 195 649 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20170126171 A
- EP 3508911 A1